(19) Europäisches Patentamt
European Patent Office
Office européen des brevets

(11) EP 2 468 813 B1

(12) EUROPEAN PATENT SPECIFICATION

(45) Date of publication and mention of the grant of the patent:
**27.03.2013 Bulletin 2013/13**

(51) Int Cl.:
***C08K 5/00*** *(2006.01)* ***C08K 5/14*** *(2006.01)*
***H01B 9/00*** *(2006.01)* ***B32B 27/32*** *(2006.01)*

(21) Application number: **10015974.8**

(22) Date of filing: **22.12.2010**

(54) **Scorch resistant polyethylene composition**

Anvulkanisationsbeständige Polyethylenzusammensetzung

Composition de polyéthylène résistant au roussissement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.06.2012 Bulletin 2012/26**

(73) Proprietor: **Borealis AG**
**1220 Vienna (AT)**

(72) Inventor: **Nylander, Perry**
**412 61 Göteborg (SE)**

(74) Representative: **Kador & Partner**
**Corneliusstrasse 15**
**80469 München (DE)**

(56) References cited:
**EP-A1- 1 695 996** **WO-A1-93/08222**
**GB-A- 1 293 429** **GB-A- 1 535 038**

- **DATABASE WPI Week 199702 Thomson Scientific, London, GB; AN 1997-017506 XP002638746, -& JP 8 283470 A (MITSUBISHI CABLE IND LTD) 29 October 1996 (1996-10-29)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 468 813 B1

## Description

The present invention relates to a polyethylene composition having an improved resistance to scorch formation during extrusion. Furthermore, the invention relates to articles, in particular multilayer articles like power cables, comprising the polyethylene composition.

Electric cables, in particular electric power cables for medium and high voltages, are made of a plurality of polymer layers extruded around the electric conductor. The electric conductor is usually coated first with an inner semiconducting layer, followed by an insulating layer, then an outer semiconducting layer. To these layers, further layers may be added, such as water-barrier layer and a sheath layer.

Normally, the insulating layer and the semiconducting layer are made of ethylene homo- and/or copolymers which are preferably cross-linked.

The cross-linking of the used polyethylene composition is of special interest since deformation resistance at elevated temperature of the cable can be improved.

For the cross-linking reaction an unsaturated polyethylene in combination with a cross-linking agent is used.

In general, the degree of unsaturation of the polyethylene depends on the specific conditions chosen for the polymerization process. This is true for high pressure as well as low pressure conditions. If e.g. polyethylene is produced by radical polymerization (so-called low-density polyethylene LDPE), the number of double bonds within the polymer is usually quite low. However, in many situations, it is desirable to use polyethylene compounds having a higher degree of unsaturation which may serve to introduce functional groups into the polymer molecule or to effect cross-linking of the polymer.

In WO 93/08222, an unsaturated low-density polyethylene (LDPE) having improved cross-linking properties was prepared by high pressure radical polymerization of ethylene and a specific type of polyunsaturated comonomers. The increased amount of unsaturation of the LDPE copolymer increases the cross-linking activity when combined with the cross-linking agent.

Cross-linking can be effected by adding free-radical forming agents like peroxides to the polymeric material prior to or during extrusion. The free-radical forming agent should preferably remain stable during extrusion performed at a temperature low enough to minimize the early decomposition of the peroxide but high enough to obtain proper melting and homogenization. Furthermore, the cross-linking agent should decompose in a subsequent cross-linking step at elevated temperature. If e.g. a significant amount of peroxide already decomposes in the extruder, thereby initiating premature cross-linking, this will result in the formation of so-called "scorch", i.e. inhomogeneity, surface unevenness and possibly discoloration in the different layers of the resultant cable. Thus, any significant decomposition of free-radical forming agents during extrusion should be avoided.

On the other hand, thermal treatment at the elevated temperature of the extruded polyethylene layer should result in high cross-linking speed and high cross-linking efficiency, in order to obtain a composition showing improved resistance to thermal and mechanical stress. Thus, there should be a good balance between cross-linking efficiency and suppression of scorch in the composition.

EP 1 695 996 describes a cross-linkable polymer composition comprising a unsaturated polyolefin, a cross-linking agent and further a scorch retarder to reduce the scorch formation in the composition during extrusion by maintaining a high cross-linking speed.

Furthermore, it is state of the art that for avoiding premature cross-linking, but increasing the compound processability, compositions having higher scorch times should be used. For increasing the scorch time of a composition it is also known that in order to solve this technical problem, organic peroxides having a longer half life could be utilized; however this leads to curing times which are too long to reach complete curing. Therefore, additives which decrease the curing time are added into the peroxide mixture.

For example EP 0 785 229 describes a scorch resistant peroxidic composition utilizable for curing of elastomers and polyolefins comprising a peroxide, an hydroquinone derivate as scorch retarder and a curing promoter.

Therefore, object of the present invention is to provide a polymer composition suitable for multi-layer articles, in particular for cable applications, showing improved resistance to scorch formation by maintaining a high degree of cross-linking, and thus, to obtain a cross-linked composition having improved final properties.

This object could be achieved by a polyethylene composition and the process as defined in the claims.

The cross-linkable polyethylene composition according to the present invention comprises

(i) an unsaturated polyethylene having a total amount of carbon-carbon double bonds/1000 carbon atoms of at least 0.1, and

(ii) a cross-linking agent mixture comprising a first peroxide which is 1, 3 1,4-bis (tert-butylperoxyisopropyl)-benzene and a second peroxide which is dicumylperoxide, wherein the first peroxide has a 10-hour-half-life-temperature which is 1 to 10 degrees higher than that of the second peroxide monitored by differential scanning calorimerty-thermal activity monitoring (DSC-TAM) wherein the tested peroxide is diluted to a concentration of 0.1 Mol in dodecane.

and wherein said first peroxide is present in an amount of at least 8 wt% based on the total amount of the first and second peroxide of the cross-linking agent mixture.

One aspect of the invention by using mixtures of peroxides is to reduce the concentration of each peroxide decomposition product. This will decrease the driving force for migration of each peroxide decomposition substance.

Another aspect of the invention by using mixtures of peroxides is that the half-time of the mixture can be tailored by the components concentrations so that it meets specific needs, compared to the use of pure peroxides where the half-time is fixed.

In Figure 1 the scorch behavior of tested Polymer 1 in combination with a cross-linking agent mixture containing 1,3 1,4-bis(*tert*-butylperoxyisopropyl)-benzene in combination with dicumylperoxide (rhombus) or 2,5 dimethyl-2,5-di(t-butylperoxy)hexane in combination with dicumylperoxide (triangle) are shown (Monsanto scorch test).

Figure 2 shows the test results of the Göttfert curing test using as test samples Polymer 1 in combination with a cross-linking agent mixture containing 1,3 1,4-bis(*tert*-butylperoxyisopropyl)benzene in combination with dicumlyperoxide (rhombus) or 2,5 dimethyl-2,5-di(t-butylperoxy)hexane in combination with dicumylperoxide (triangle).

The below description of the preferable polymers is preferred for the polymer composition of the invention and for the cross-linking method of the invention.

The present invention relates to a cross-linkable polyethylene composition comprising an unsaturated polyethylene, where herein the term "polyethylene" is intended to mean both a homo- and copolymer, e.g. an ethylene homo- and copolymer. The ethylene copolymer may contain one or more comonomer(s) whereby ethylene will form the major monomer content present in any polyethylene.

As well known, the term "comonomer" refers to copolymerisable comonomer units.

Where the polyethylene is an ethylene copolymer with at least one comonomer, then suitable comonomers are selected from non-polar comonomer(s) or polar comonomers, or any mixtures thereof.

Preferable non-polar comonomers and polar comonomers are described below in relation to polyethylene produced in a high pressure process. These comonomers can be used in any polyethylene of the invention.

Preferably, the polyethylene is produced in the presence of an olefin polymerization catalyst or a polyethylene produced in a high pressure process.

According to an embodiment the polyethylene is produced in a high pressure polymerization process, preferably by radical polymerization in the presence of an initiator(s). More preferably the polyethylene is a low density polyethylene (LDPE).

It is to be noted that a polyethylene produced in a high pressure (HP) is referred herein generally as LDPE and which term has a well known meaning in the polymer field. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as high branching degree, compared to the PE produced in the presence of an olefin polymerization catalyst.

According to the present invention the LDPE may be a low density homopolymer of ethylene (referred herein as LDPE homopolymer) or a low density copolymer of ethylene with one or more comonomer(s) (referred herein as LDPE copolymer).

Typically, and preferably in wire and cable (W&C) applications, the density of the polyethylene is higher than 860 $kg/m^3$. Preferably the density of the polyethylene is not higher than 960 $kg/m^3$, and preferably is from 900 to 945 $kg/m^3$, more preferably from 910 to 935 $kg/m^3$, most preferably from 915 to 930 $kg/m^3$.

The $MFR_2$ (2.16 kg, 190 °C) of the polyethylene, preferably of the LDPE polymer, is preferably from 0.01 to 50 g/10min, more preferably from 0.01 to 30.0 g/10, more preferably is from 0.1 to 20 g/10min, and even more preferably from 0.2 to 10 g/10min.

In case the polyethylene, preferably the LDPE polymer, is a copolymer, one or more comonomers of ethylene copolymer are preferably selected from the polar comonomer(s), non-polar comonomer(s) or from a mixture of the polar comonomer(s) and non-polar comonomer(s), as defined below.

As a polar comonomer for the ethylene copolymer, comonomer(s) containing hydroxyl group(s), alkoxy group(s), carbonyl group(s), carboxyl group(s), ether group(s) or ester group(s), or a mixture thereof, can be used.

More preferably, comonomer(s) containing carboxyl and/or ester group(s) are used as said polar comonomer.

Still more preferably, the polar comonomer(s) is selected from the groups of acrylate(s), methacrylate(s) or acetate(s), or any mixtures thereof.

If present in said ethylene copolymer, the polar comonomer(s) is preferably selected from the group of alkyl acrylates, alkyl methacrylates or vinyl acetate, or a mixture thereof.

Further preferably, said polar comonomers are selected from $C_1$- to $C_6$-alkyl acrylates, $C_1$- to $C_6$-alkyl methacrylates or vinyl acetate. Still more preferably, said polar LDPE copolymer is a copolymer of ethylene with $C_1$-to $C_4$-alkyl

acrylate, such as methyl, ethyl, propyl or butyl acrylate, or vinyl acetate, or any mixture thereof.

As the non-polar comonomer(s) for the ethylene copolymer, preferably for the LDPE copolymer, comonomer(s) other than the above defined polar comonomers can be used.

Preferably, the non-polar comonomers are other than comonomer(s) containing hydroxyl group(s), alkoxy group(s), carbonyl group(s), carboxyl group(s), ether group(s) or ester group(s). One group of preferable non-polar comonomer(s) comprise, preferably consist of, monounsaturated ,i.e., one double bond, comonomer(s), preferably olefins, preferably alpha-olefins, more preferably $C_3$ to $C_{10}$ alpha-olefins, such as propylene, 1-butene, 1-hexene, 4-methyl-1-pentene, styrene, 1-octene, 1-nonene; polyunsaturated, i.e., more than one double bond, comonomer(s); a silane group containing comonomer(s); or any mixtures thereof. The polyunsaturated comonomer(s) are further described below in relation to unsaturated LDPE copolymers.

If the ethylene polymer is a copolymer, it preferably comprises 0.001 to 50 wt.-%, more preferably 0.05 to 40 wt.-%, still more preferably less than 35 wt.-%, still more preferably less than 30 wt.-%, more preferably less than 25 wt.-%, of one or more comonomer(s).

The polyethylene used in the cross-linkable polyethylene composition according to the present invention is unsaturated, i.e. the polyethylene comprises carbon-carbon double bonds (-C=C-).

The term "unsaturated" means herein that the polyethylene, contains carbon-carbon double bonds/1000 carbon atoms in a total amount of at least 0.1/1000 carbon atoms.

If an ethylene homopolymer, preferably an LDPE ethylene homopolymer, is unsaturated, then the unsaturation can be provided e.g. by a chain transfer agent (CTA), such as propylene, and/or by polymerization conditions.

If an ethylene copolymer, preferably an LDPE copolymer, is unsaturated, then the unsaturation can be provided by one or more of the following means:

- by a chain transfer agent (CTA),
- by one or more polyunsaturated comonomer(s) or
- by polymerisation conditions.

It is well known that selected polymerization conditions such as peak temperatures and pressure, can have an influence on the unsaturation level.

In case of an unsaturated ethylene copolymer, preferably of an unsaturated LDPE copolymer, the copolymer is for example a copolymer of ethylene with at least one polyunsaturated comonomer, and optionally with other comonomer(s), such as polar comonomer(s) which is preferably selected from acrylate or acetate comonomer(s). More preferably an unsaturated LDPE copolymer is an unsaturated LDPE copolymer of ethylene with at least polyunsaturated comonomer(s).

The polyunsaturated comonomers suitable for the unsaturated polyethylene preferably consist of a straight carbon chain with at least 8 carbon atoms and at least 4 carbons between the non-conjugated double bonds, of which at least one is terminal, more preferably, said polyunsaturated comonomer is a diene, preferably a diene which comprises at least eight carbon atoms, the first carbon-carbon double bond being terminal and the second carbon-carbon double bond being non-conjugated to the first one. Preferred dienes are selected from $C_8$ to $C_{14}$ non-conjugated dienes or mixtures thereof, more preferably selected from 1,7-octadiene, 1,9-decadiene, 1,11-dodecadiene, 1,13-tetradecadiene, 7-methyl-1,6-octadiene, 9-methyl-1,8-decadiene, or mixtures thereof. Even more preferably, the diene is selected from 1,7-octadiene, 1,9-decadiene, 1,11-dodecadiene, 1,13-tetradecadiene, or any mixture thereof, however, without limiting to above dienes.

It is well known that e.g. propylene can be used as a comonomer or as a chain transfer agent (CTA), or both, whereby it can contribute to the total amount of the carbon-carbon double bonds, preferably to the total amount of the vinyl groups. Herein, when a compound which can also act as comonomer, such as propylene, is used as CTA for providing double bonds, then said copolymerisable comonomer is not calculated to the comonomer content.

It is preferred that the total amount of carbon-carbon double bonds, which originate from vinyl groups, vinylidene groups and trans-vinylene groups, in the polyethylene is at least 0.1/1000 carbon atoms, preferably of at least 0.15/1000 carbon atoms, even more preferably of at least 0.2/1000 carbon atoms, most preferably of at least 0.3/1000 carbon atoms. The upper limit of the amount of carbon-carbon double bonds present in the polyolefin is not limited and may preferably be equal or less than 5.0/1000 carbon atoms, preferably equal or less than 3.0/1000 carbon atoms.

More preferably, the unsaturated polyethylene as defined above contains at least vinyl groups and the total amount of vinyl groups is preferably higher than 0.05/1000 carbon atoms, still more preferably higher than 0.08/1000 carbon atoms, and most preferably of higher than 0.11/1000 carbon atoms. Preferably, the total amount of vinyl groups is of lower than 4.0/1000 carbon atoms. More preferably, the unsaturated polyethylene, contains, prior to cross-linking, vinyl groups in total amount of more than 0.15/1000 carbon atoms, preferably of more than 0.20/1000 carbon atoms, preferably of more than 0.25/1000 carbon atoms still more preferably of more than 0.30/1000 carbon atoms.

The unsaturated polyethylene as defined above, is an unsaturated ethylene homopolymer or an unsaturated

ethylene copolymer of ethylene with at least one polyunsaturated comonomer, preferably a diene as defined above, and optionally with other comonomer(s), and has the total amount of carbon-carbon double bonds, which originate from vinyl groups, vinylidene groups and trans-vinylene groups, if present, as defined above, preferably has the total amount of vinyl groups as defined above.

Said unsaturated polyethylene polymer, preferably unsaturated LDPE copolymer, is highly usable for the invention for use as the unsaturated polyethylene of the cross-linkable polymer composition, preferably in a layer, preferably a cross-linkable layer, of a power cable.

Accordingly, the polyethylene of the invention is preferably a LDPE polymer, which is preferably produced at high pressure by free radical initiated polymerisation (referred to as high pressure (HP) radical polymerization). The HP reactor can be e.g. a well known tubular or autoclave reactor or a combination thereof, preferably a tubular reactor. The high pressure (HP) polymerization and the adjustment of process conditions for further tailoring the other properties of the polyolefin depending on the desired end application are well known and described in the literature, and can readily be used by a skilled person. Suitable polymerization temperatures range up to 400 °C, preferably from 80 to 350°C and pressure from 70 MPa, preferably 100 to 400 MPa, more preferably from 100 to 350 MPa. Pressure can be measured at least after compression stage and/or after the tubular reactor. Temperature can be measured at several points during all steps.

After the separation the obtained LDPE is typically in a form of a polymer melt which is normally mixed and pelletized in a pelletising section, such as pelletising extruder, arranged in connection to the HP reactor system. Optionally, additive(s), such as antioxidant(s), can be added in this mixer in a known manner.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

When an unsaturated ethylene, preferably the unsaturated LDPE, copolymer is prepared, then, as well known, the carbon-carbon double bond content can be adjusted by polymerizing the ethylene e.g. in the presence of one or more polyunsaturated comonomer(s), chain transfer agent(s), or both, using the desired feed ratio between ethylene monomer and polyunsaturated comonomer and/or chain transfer agent, depending on the nature and amount of C-C double bonds desired for the unsaturated ethylene copolymer. WO 9308222 describes a high pressure radical polymerisation of ethylene with polyunsaturated monomers. As a result the unsaturation can be uniformly distributed along the polymer chain in random copolymerisation manner. Also e.g. WO 9635732 describes high pressure radical polymerization of ethylene and a certain type of polyunsaturated $\alpha,\omega$-divinylsiloxanes.

The cross-linkable polyethylene composition according to the present invention further comprises a cross-linking agent mixture. In the context of the present invention, a cross-linking agent is defined to be any compound capable to generate radicals which can initiate a cross-linking reaction which might be the case if the compound contains at least one -O-O-bond.

In any case, the cross-linking agent mixture of the present invention comprises a first and a second peroxide which differ in their half-lives.

The half-life of peroxide is defined as the time it takes for one half of a given quantity of peroxide in dilute solution to decompose at a given temperature. The decomposition rate is first order and is characterized at a given temperature by the equation

$$-dC/dt = kC$$

where C is peroxide concentration,

t is time and

k is the first-order rate constant.

For convenience in comparing the stability of peroxides in dilute solutions, peroxides are commonly listed according to the temperatures at which they have half-lives of 10 hours or 1 hour. The higher the temperature corresponding to the half-life, the more stable the peroxide. Half-life temperatures can vary based on the manner in which they are determined, especially the solvent used.

According to the present invention one peroxide indicated as first peroxide has a 10-hour-half-life-temperature which is 1 to 10 degrees higher than that of the second peroxide, i.e. the cross-linking agent mixture of the present invention comprises at least two peroxides showing different stabilities.

The use of the first and second peroxide which have different half-lives in the cross-linking agent mixture avoids an undesired premature cross-linking during extrusion of the composition, but allows a cross-linking speed which is high enough to obtain a sufficient degree of cross-linking. Thus, the polyethylene composition of the present invention shows a good balance between cross-linking efficiency and suppression of scorch formation in the composition.

According to the present invention it is preferred that the first peroxide has a 10-hour-half-life-temperature which is 1 to 10 degrees or more preferred is 2 to 8 degrees, even more preferred 3 to 6 degrees higher than that of the second peroxide.

The half-life time and half-life temperature time, respectively, of the used first and second peroxide are determined by differential scanning calorimetry-thermal activity monitoring (DSC-TAM). The decomposition of a peroxide follows the Arrhenius equation:

$$k_d = A \cdot \exp(-E_a / RT)$$

where $k_d$ is the rate constant for peroxide decomposition in $s^{-1}$, A is the Arrhenius frequency factor in $s^{-1}$, $E_a$ is the activation energy of peroxide decomposition in J/mole, R is the universal gas constant (= 8.31451 J/(moles·K) and T is the temperature in degrees Kelvin.

The concentration of peroxide can be expressed by the following equation:

$$[P] = [P_0] \cdot \exp(-k_d \cdot t)$$

where [P] is the peroxide concentration at time t, $[P_0]$ is the initial peroxide concentration and t is the time from the start of decomposition in s.

Peroxide half life, $t_{½}$, is defined as the time it takes for half of the initial peroxide amount to decompose. This means that [P] is half of $[P_0]$ which gives that:

$$t_{½} = \ln(2)/k_d$$

This, in turn, means that the relation between $t_{½}$ and T can be expressed as:

$$t½ = \ln(2)/(A \cdot \exp(-E_a/RT)$$

which gives

$$\ln(t_{½}) = \ln(\ln(2)/(A \cdot \exp(-E_a/RT))$$

which, in turn, may be written as

$$\ln(t_{½}) = \ln(\ln(2)) - \ln(A) + Ea/(RT)$$

So, by determining the half life, t½, at a number of temperatures, T, and plotting $\ln(t_{½})$ vs 1/T, a straight line can be fitted to the data points. From this line, both $E_a$ and A can be determined. The slope of the line will equal $E_a/R$. Hence, $E_a$ will be the slope of the line multiplied by the universal gas constant, R:

$$E_a = R \cdot slope$$

The intercept of the line with the $\ln(t_{½})$ axis (int) will equal ln(ln(2))-ln(A). Hence,

$$A = \ln(2)/\exp(int)$$

When $E_a$ and A are known, the previously given relation

$$t½ = ln(2)/(A \cdot exp(-E_a/RT)$$

can be used to calculate the half life at any given temperature. Consequently, the temperature at which the peroxide has a given half life (*i.e.* half life temperature) can also be calculated using the same relationship.

Furthermore, in the cross-linking agent mixture of the present invention the first peroxide is present in an amount of at least 8 wt% based on the total amount of the first and second peroxide of the cross-linking agent mixture.

It is preferred that the first peroxide is used in amount of at least 10 wt%, more preferred of at least 20 w%, most preferred of at least 30 wt% based on the total amount of the first and second peroxide.

However, the used amount of the first peroxide is preferably not higher than 90 wt%, more preferably not higher than 80 wt%, most preferably not higher than 70 wt% based on the total amount of the first and second peroxide.

The first peroxide of the two different peroxides is 1,3, 1,4-bis(*tert*-butylperoxyisopropyl)-benzene.

The second peroxide is dicumylperoxide.

The cross-linkable polyethylene composition comprises the cross-linking agent mixture preferably in an amount of 0.05 to 5.0 wt%, more preferably in an amount of 0.1 to 2.5 wt%, most preferably in an amount of 0.3 to 2.0 wt% based on the total cross-linkable polyethylene composition.

It is also preferred that the cross-linkable polyethylene composition comprises the unsaturated polyethylene in an amount of 70 to 99.7 wt.%, more preferred in an amount of 95 to 98.5 wt%, based on the total cross-linkable polyethylene composition.

The cross-linkable polyethylene composition of the present invention may further comprise additives selected from the group consisting of cross-linking booster(s), antioxidant(s), stabilizer(s), carbon black(s) and combinations thereof.

As antioxidant, sterically hindered or semi-hindered phenols, aromatic amines, aliphatic sterically hindered amines, organic phosphates, thio compounds, and mixtures thereof, can be mentioned. Typical cross-linking boosters may include compounds having an allyl group, e.g. triallylcyanurate, triallylisocyanurate, and di-, tri- or tetra-acrylates. As further additives, flame retardant additive(s), acid scavenger(s), inorganic filler(s), pigment(s) and voltage stabilizer (s) can be mentioned.

If an antioxidant, optionally a mixture of two or more antioxidants, is used, the added amount can range from 0.005 to 2.5 wt-%, based on the weight of the cross-linkable polyethylene composition. It is preferred that the antioxidant (s) are added in an amount of 0.005 to 0.8 wt-%, more preferred in an amount of 0.01 to 0.60 wt-%, even more preferred in an amount of 0.03 to 0.50 wt-%, based on the weight of the cross-linkable polyethylene composition.

Further additives may be present in an amount of 0.005 to 3 wt%, more preferably 0.005 to 2 wt% based on the total cross-linkable composition. Flame retardant additive(s) and inorganic filler(s) can be added in higher amounts.

In one embodiment will the cross-linkable composition contain carbon black. The used carbon black content in the cross-linkable polyethylene composition is preferably 10 to 45 wt%, more preferably, 20 to 45 wt%, most preferably 30 to 45 wt% based on the total cross-linkable polyethylene composition. Any carbon black can be used which is electrically conductive and provides semiconductive property needed for the semiconductive layer.

Preferably, the carbon black may have a nitrogen surface area (BET) of 5 to 400 $m^2/g$, preferably of 10 to 300 $m^2/g$, more preferably of 30 to 200 $m^2/g$, when determined according to ASTM D3037-93. Further preferably the carbon black has one or more of the following properties:

i) a primary particle size of at least 5 nm which is defined as the number average particle diameter according to ASTM D3849-95a procedure D,

ii) iodine absorption number (IAN) of at least 10mg/g, preferably of 10 to 300 mg/g, more preferably of 30 to 200 mg/g, when determined according to ASTM D-1510-07; and/or

iii) DBP (dibutyl phthalate) absorption number of 60 to 300 cm3/100g, preferably of 90 to 250 $cm^3/100g$, more preferably of 80 to 200, preferably of 90 to 180 $cm^3/100g$, when measured according to ASTM D 2414-06a.

More preferably the carbon black has a nitrogen surface area (BET) and properties (i), (ii) and (iii) as defined above.

Non-limiting examples of preferable carbon blacks include furnace carbon blacks and acetylene blacks.

From the cross-linkable polyethylene composition described above, a cross-linked composition can be prepared by treatment under cross-linking conditions. Due to the fact that in the present invention the use of the first and second peroxide is required, cross-linking is initiated by increasing the temperature to the decomposition temperatures of the corresponding peroxides, e.g. at a temperature of at least 150°C.

From the cross-linkable polyethylene composition of the present invention, a multilayered article can be prepared wherein at least one layer comprises said polyethylene composition. When cross-linking is initiated, a cross-linked multilayered article is obtained. Preferably, the multilayered article (either cross-linked or not) is a power cable.

The multilayered article can be prepared in a process wherein the cross-linkable polyethylene composition of the present invention is applied onto a substrate by extrusion. In such an extrusion process, the sequence of mixing the components of the cross-linkable composition can be varied, as explained below.

According to a preferred embodiment, the unsaturated polyethylene is mixed with one or more antioxidants, possibly in combination with further additives, either on solid pellets or powder or by melt mixing, followed by forming pellets from the melt. Subsequently, the cross-linking agent mixture is added to the pellets or powder in a second step. Alternatively, the cross-linking agent mixture could already be added in the first step, together with the antioxidant(s). The final pellets are fed to the extruder, e.g. a cable extruder.

According to another preferred embodiment, instead of a two-step process, the unsaturated polyethylene, preferably in the form of pellets or powder, and the cross-linking agent mixture, optionally antioxidant(s) and/or further additives, are added to a compounding extruder, single or twin screw. Preferably, the compounding extruder is operated under careful temperature control.

According to another preferred embodiment, a mix of all components, i.e. including cross-linking agent mixture, antioxidant(s) and/or optionally further additive(s), are added into the pellets or powder made of the unsaturated polyethylene.

According to another preferred embodiment, pellets made of the unsaturated polyethylene without any additional components are fed to the extruder. Subsequently, cross-linking agent mixture, optionally in combination with antioxidant (s) and/or further additive(s), are either fed in the hopper or directly fed into the polymeric melt within the cable extruder. Alternatively, at least one of these components, i.e. cross-linking agent mixture, antioxidant(s), further additive(s) or a mixture of these components is already added to the pellets before feeding these pellets into the cable extruder.

According to another preferred embodiment, a highly concentrated master batch is prepared. The master batch may also comprise one or more antioxidants and cross-linking agent mixture. This master batch is then added to/mixed with the unsaturated polyethylene. Alternatively, only one of these two components is present in the starting master batch whereas the second component (i.e. either antioxidant(s), or cross-linking agent mixture) is added separately.

Typical extrusion conditions are mentioned in WO 93/08222.

In a preferred embodiment said article of the invention is a cable which comprises a conductor which is surrounded by one or more layers, wherein at least one layer comprising the cross-linkable polyethylene composition of the invention.

In the context of the present invention, a power cable is defined to be a cable transferring energy operating at any voltage.

The term "conductor" means herein above and below that the conductor comprises one or more wires. Moreover, the cable may comprise one or more such conductors. Preferably the conductor is an electrical conductor.

In one embodiment of the cable of the invention at least one layer is an insulation layer which comprises the cross-linkable polyethylene composition of the invention. Thus, viewed from another aspect the invention provides a cable which comprises at least one insulation layer comprising the cross-linkable polyethylene composition of the invention.

In another embodiment of the cable of the invention at least one layer is a semiconductive layer which is made of the polyethylene composition of the invention. "Semiconductive layer" means herein that said layer comprises carbon black and has a volume resistivity of 100 000 Ω-cm or below when measured at 23°C or 90°C, or, when measured according to ISO 3915 using a plaque, has a volume resistivity of 100 Ω-cm or below at 23°C, or of 1000 Ω-cm or below at 90°C. Thus, viewed from another aspect the invention provides a cable which comprises at least one semiconductive layer which is made of the polyethylene composition of the invention.

In further embodiment, the cable of the invention comprises a jacketing layer(s) and optionally one or more layers selected from an insulation layer and semiconductive layer surrounded by said jacketing layer, wherein said jacketing layer(s) comprises the cross-linkable polyethylene composition of the invention.

The cable produced by using the cross-linkable polyethylene composition of the invention may be

- a low voltage cable comprising a conductor surrounded by an insulation layer and optionally a jacketing layer, wherein at least one layer, preferably at least said insulation layer comprises the cross-linkable polyethylene composition of the invention; or
- a power cable comprising an electrical conductor surrounded by one or more layers comprising at least an inner semiconductive layer, insulation layer and an outer semiconductive layer, in that order, and optionally surrounded by a jacketing layer, wherein at least one of said layers comprises the polyethylene composition of the invention.

In the above power cable embodiment of the invention, the layer is preferably selected from an insulation layer

or a semiconductive layer, more preferably at least from insulation layer.

In the context of the present invention, a low voltage cable is a cable operating in voltages 6 kV or below. A power cable is defined to be a cable transferring energy operating at any voltage, typically operating at voltages higher than 6 kV. The voltage applied to the power cable can be alternating (AC), direct (DC), or transient (impulse).

In a preferred embodiment, the power cable prepared according to the present invention is operating at voltages higher than 6 kV and is known i.a. as medium voltage (MV), high voltage (HV) and extra high voltage (EHV) power cables, which terms have well known meaning and indicate the operating level of such cable.

The outer semiconductive layer of said power cable of the invention can be non-strippable, i.e. bonded and non-peelable, or strippable, i.e. non-bonded and peelable. Said terms have well known meanings in the wire and cable field.

## Determination Methods

Unless otherwise stated the below determination methods were used to determine the properties defined generally in the description part and claims and in the experimental part.

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylenes and may be determined at different loadings such as 2.16 kg ($MFR_2$) or 21.6 kg (MFR21).

### Density

Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183 / 1872-2B.

### Quantification of the amount of carbon-carbon double bonds by IR spectroscopy

Quantitative infrared (IR) spectroscopy was used to quantify the amount of carbon-carbon double bonds (C=C). Calibration was achieved by prior determination of the molar extinction coefficient of the C=C functional groups in representative low molecular weight model compounds of known structure.

The amount of each of these groups (N) was determined as number of carbon-carbon double bonds per thousand total carbon atoms (C=C/1000C) via:

$$N = (A \times 14) / (E \times L \times D)$$

where A is the maximum absorbance defined as peak height, E the molar extinction coefficient of the group in question ($l \cdot mol^{-1} \cdot mm^{-1}$), L the film thickness (mm) and D the density of the material ($g \cdot cm^{-1}$).

The total amount of C=C bonds per thousand total carbon atoms can be calculated through summation of N for the individual C=C containing components.

For polyethylene samples solid-state infrared spectra were recorded using a FTIR spectrometer (Perkin Elmer 2000) on compression moulded thin (0.5-1.0 mm) films at a resolution of 4 $cm^{-1}$ and analyzed in absorption mode.

<u>(1) Polymer compositions comprising polyethylene homopolymers and copolymers, except polyethylene copolymers with > 0.4 wt% polar comonomer</u>

For polyethylenes three types of C=C containing functional groups were quantified, each with a characteristic absorption and each calibrated to a different model compound resulting in individual extinction coefficients:

- vinyl (R-CH=CH2) via 910 $cm^{-1}$ based on 1-decene [dec-1-ene] giving E = 13.13 $l \cdot mol^{-1} \cdot mm^{-1}$

- vinylidene (RR'C=CH2) via 888 $cm^{-1}$ based on 2-methyl-1-heptene [2-methyhept-1-ene] giving E = 18.24 $l \cdot mol^{-1} \cdot mm^{-1}$

- trans-vinylene (R-CH=CH-R') via 965 $cm^{-1}$ based on trans-4-decene [(E)-dec-4-ene] giving E = 15.14 $l\cdot mol^{-1}\cdot mm^{-1}$

For polyethylene homopolymers or copolymers with < 0.4 wt% of polar comonomer linear baseline correction was applied between approximately 980 and 840 $cm^{-1}$.

(2) Polymer compositions comprising polyethylene copolymers with > 0.4 wt% polar comonomer

For polyethylene copolymers with > 0.4 wt% of polar comonomer two types of C=C containing functional groups were quantified, each with a characteristic absorption and each calibrated to a different model compound resulting in individual extinction coefficients:

- vinyl (R-CH=$CH_2$) via 910 $cm^{-1}$ based on 1-decene [dec-1-ene] giving E = 13.13 $l\cdot mol^{-1}\cdot mm^{-1}$

- vinylidene (RR'C=CH2) via 888 $cm^{-1}$ based on 2-methyl-1-heptene [2-methyl-hept-1-ene] giving E = 18.24 $l\cdot mol^{-1}\cdot mm^{-1}$ EBA:

For poly(ethylene-co-butylacrylate) (EBA) systems linear baseline correction was applied between approximately 920 and 870 $cm^{-1}$.

EMA:

For poly(ethylene-co-methylacrylate) (EMA) systems linear baseline correction was applied between approximately 930 and 870 $cm^{-1}$.

(3) Polymer compositions comprising unsaturated low molecular weight molecules

For systems containing low molecular weight C=C containing species direct calibration using the molar extinction coefficient of the C=C absorption in the low molecular weight species itself was undertaken.

**Quantification of molar extinction coefficients by IR spectroscopy**

The molar extinction coefficients were determined according to the procedure given in ASTM D3124-98 and ASTM D6248-98. Solution-state infrared spectra were recorded using a FTIR spectrometer (Perkin Elmer 2000) equipped with a 0.1 mm path length liquid cell at a resolution of 4 $cm^{-1}$.

The molar extinction coefficient (E) was determined as $l\cdot mol^{-1}\cdot mm^{-1}$ via:

$$E = A / (C \times L)$$

where A is the maximum absorbance defined as peak height, C the concentration ($mol\cdot l^{-1}$) and L the cell thickness (mm).

At least three 0.18 $mol\cdot l^{-1}$ solutions in carbondisulphide ($CS_2$) were used and the mean value of the molar extinction coefficient determined.

**Monsanto scorch test**

The resistance to scorch formation of the different formulations was evaluated in a Monsanto Moving Die Rheometer MDR2000E.

The experiments were carried out using press-moulded circular plaques. The circular plaques were produced by filling a circular mould with diameter of 39 mm and a thickness of 2.8 mm with the peroxide containing material. The mould and its contents were put into a press which was heated to 120°C. The material was allowed to melt for 2 minutes without applied pressure. After this, the mould was pressurized to 5 bar for 2 minutes. The press was cooled by internal water cooling to room temperature for 5 to 10 min, pressure kept at 5. Pressure was released and the circular plaque was pushed out of the mould by hand.

The MDR 2000 "Monsanto" rheometer measures the change in shearing modulus on cross-linkable polyethylene, where the peroxide(s) in the material decomposes and cross-links the sample. The instrument consists of two sample chambers which were heated to 150 °C. These chambers were pressured together with the test sample in between. The lower chamber was oscillated 0.5° at a frequency of 50 times/minute. The torque was measured in dNm

and recorded by a computer. As the material cross-linked from the heat in the chamber, the torque increased. When the material was fully cross-linked, or all the peroxide was consumed, the curve levels out. Two samples per material were tested. The Results of the measured method are given in Tables 2 to 4 and Figure 1.

**Göttfert curing**

The degree of cross-linking was determined on a Göttfert Elastograph Vario 67.98.

The experiments were carried out using press-moulded circular plaques. The circular plaques were produced by filling a circular mould with diameter of 39 mm and a thickness of 4.6 mm with the peroxide containing material. The mould and its contents were put into a press which was heated to 120°C. The material was allowed to melt for 2 minutes without applied pressure. After this, the mould was pressurized to 5 bar for 2 minutes. The press was cooled by internal water cooling to room temperature for 5 to 10 min, pressure kept at 5. Pressure was released and the circular disc was pushed out of the mould by hand.

The Göttert Elastograph consists of two sample chambers heated to 180 °C. These chambers were pressured together with the test sample in between. The lower chamber was oscillated 0.5° at a frequency of 50 times/minute. The torque was measured in dNm and recorded by a computer. As the material cross-linked from the heat in the chamber, the torque increased. When the material was fully cross-linked, or all the peroxide was consumed, the curve levels out. Two samples per material were tested. The Results of the measured method are given in Tables 2 to 4 and Figure 2.

**Determination of peroxide half-time**

To determine the 10-hour-half-life-temperatures of the peroxides, the decomposition was monitored by differential scanning calorimetry-thermal activity monitoring (DSC-TAM). The heat fluxes from samples of peroxide diluted to a concentration of 0.1 M in dodecane were compared to pure dodecane on standard DSC equipment. The heat emitted by the sample is directly related to the peroxide concentration [P], which means that $k_d$ in

$$[P] = [P0] \cdot \exp(-k_d \cdot t)$$

can be determined by monitoring the exponential decay of heat emission at a set temperature (T), which in turn gives $t_{½}$ as described previously.

**Differential Scanning Calorimetry**

The Melting Temperature (Tm) and the Crystallization Temperature (Tcr) were measured with Mettler TA820 differential scanning calorimeter (DSC) on 3±0.5 mg samples. Both crystallization and melting curves were obtained during 10°C/min cooling and heating scans between -10 - 200°C. Melting and crystallization temperatures were taken as the peaks of endotherms and exotherms, respectively. The degree of crystallinity was calculated by comparison with heat of fusion of a perfectly crystalline polyethylene, i.e. 290 J/g.

The invention is now further elucidated by making reference to the following examples.

**<u>Examples</u>**

**Materials**

(a) Polymers

Polymer 1 is a low density polyethylene. The polymer is produced in a high pressure tubular reactor. Furthermore, Polymer 1 has an $MFR_2$ value of 2.7 g/10min, a total amount of carbon-carbon double bounds/1000 carbon atoms of 1.17, 0.82 vinyl, vinylidene 0.24, transvinylene 0.11, a crystallization temperature of 97 °C and a melting temperature of 111 °C.

Polymer 2 is a low density polyethylene. The polymer is produced in a high pressure tubular reactor. Furthermore, Polymer 2 has an $MFR_2$ value of 2.0 g/10min, a total amount of carbon-carbon double bounds/1000 carbon atoms of 0.37,0.11 vinyl, vinylidene 0.22, transvinylene 0.04, a crystallization temperature of 99 °C and a melting temperature of 112 °C.

(b) Peroxides

Peroxide 1: 2,5-Dimethyl-2,5-di(t-butylperoxy)-hexane (CAS-No. 78-63-7) has the following chemical structure

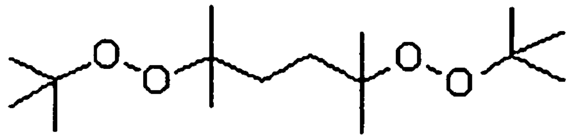

Peroxide 2: 1,3 1,4-bis(*tert*-butylperoxyisopropyl)benzene (CAS-No. 25155- 25-3) has the following chemical structure

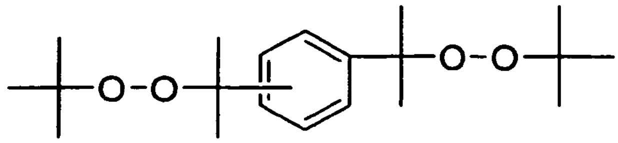

Peroxide 3: Dicumylperoxide (CAS-No. 80-43-3) has the following chemical structure

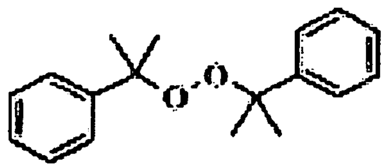

The peroxides show the following half-life times measured according to DSC-TAM in 0.1 M dodecane solution.

Table 1

| | **2,5-dimethyl-2,5-di(t-butylperoxy)-hexane (Peroxide 1)** | **1,3 1,4-bis(*tert*-butylperoxyisopropyl) benzene (Peroxide 2)** | **Dicumylperoxide (Peroxide 3)** |
|---|---|---|---|
| **Time** | **Deg C** | **Deg C** | **Deg C** |
| 100 HR | 102.11 | 101.01 | 98.98 |
| 10 HR | 120.27 | 119.25 | 117.05 |
| 1 HR | 140.29 | 139.36 | 136.97 |
| 6 MIN | 162.45 | 161.64 | 159.03 |
| 1 MIN | 181.41 | 180.72 | 177.92 |
| 1 SEC | 231.61 | 231.29 | 227.94 |

Test results

| Example | Ex. 1 | Ex. 2 | Ex. 3 | Ex. 4 | Ex. 5 | Ex. 6 | Ex. 7 | Ex. 8 |
|---|---|---|---|---|---|---|---|---|
| Polymer | Polymer 2 | | | Polymer 1 | | | | |
| | Comparative | Reference | | Comparative | Reference | | | |
| Peroxide 1 (wt%) | 0 | 0.16 | 0.27 | 0 | 0.05 | 0.11 | 0.16 | 0.21 |
| Peroxide 3 (wt%) | 1.8 | 1.5 | 1.3 | 0.6 | 0.5 | 0.4 | 0.3 | 0.2 |
| Content of Peroxide 1 in the peroxide mixture (wt%) | 0.0 | 9.6 | 17.2 | 0.0 | 9.1 | 21.6 | 34.8 | 51.2 |
| **Monsanto scorch parameters** | | | | | | | | |
| Torque max (dNm) | 3.37 | 3.08 | 3.00 | 3.60 | 3.36 | 3.31 | 3.11 | 2.88 |
| Torque increase = 10% (min) | 4.9 | 5.3 | 5.4 | 6.0 | 7.7 | 8.2 | 8.9 | 10.0 |
| Torque increase = 90% (min) | 70.9 | 74.5 | 77.1 | 69.7 | 76.4 | 80.6 | 85.3 | 87.8 |
| Torque increase = 1.00 dNm (min) | 14.1 | 16.7 | 17.8 | 14.4 | 18.2 | 19.8 | 23.0 | 27.1 |
| **Göttfert parameters** | | | | | | | | |
| Torque max (Nm) | 0.53 | 0.50 | 0.49 | 0.64 | 0.60 | 0.61 | 0.60 | 0.60 |
| Torque increase = 10% (min) | 0.71 | 0.73 | 0.73 | 0.69 | 0.75 | 0.80 | 0.83 | 0.87 |
| Torque increase = 90% (min) | 3.22 | 3.67 | 4.02 | 3.10 | 3.84 | 4.64 | 5.37 | 6.12 |
| Torque increase = 0.40 Nm (min) | 2.82 | 4.24 | 5.74 | 1.74 | 2.27 | 2.54 | 3.00 | 3.45 |

| Example | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|
| **Polymer** | Polymer 2 | | | Polymer 1 | | | | | |
| | Comparative | Inventive | | Comparative | Inventive | | | | Comparative |
| Peroxide 2 (wt%) | 0 | 0.19 | 0.31 | 0 | 0.06 | 0.13 | 0.19 | 0.25 | 0.32 |
| Peroxide 3 (wt%) | 1.8 | 1.5 | 1.3 | 0.6 | 0.5 | 0.4 | 0.3 | 0.2 | 0 |
| Content of Peroxide 2 in the peroxide mixture (wt%) | 0 | 11.2 | 19.3 | 0 | 10.7 | 24.5 | 38.8 | 55.6 | 100 |
| **Monsanto scorch parameters** | | | | | | | | | |
| Torque max (dNm) | 3.37 | 3.77 | 3.64 | 3.76 | 3.73 | 3.64 | 3.23 | 3.29 | 2.76 |
| Torque increase = 10% (min) | 4.9 | 4.8 | 4.9 | 7.0 | 6.4 | 6.6 | 8.5 | 9.0 | 11.3 |
| Torque increase = 90% (min) | 70.9 | 78.3 | 81,9 | 73,4 | 75,8 | 80,4 | 86,2 | 89,5 | 96,7 |
| Torque increase = 1,00 dNm (min) | 14,1 | 13,4 | 14,2 | 15,0 | 15,0 | 16,3 | 21,8 | 23,2 | 35,4 |
| **Göttfert parameters** | | | | | | | | | |
| Torque max (Nm) | 0.53 | 0.60 | | 0.60 | | 0.64 | 0.60 | 0.60 | 0.57 |
| Torque increase = 10% (min) | 0.71 | 0.70 | | 0.67 | | 0.72 | 0.73 | 0.76 | 0.86 |
| Torque increase = 90% (min) | 3.22 | 3.80 | | 3.10 | | 4.39 | 4.82 | 5.19 | 6.76 |
| Torque increase = 0.40 Nm (min) | 2.82 | 2.36 | | 1.97 | | 2.21 | 2.72 | 2.94 | 4.53 |

Table 2

Note:

(1) All times are from t = 0 (and not from the minimum).

(2) Torque increase X% (min) is the time when the measured torque corresponds to the minimum torque plus X% of the difference between the measured final maximum torque and the minimum torque.

The test results show that the cross-linked polyethylene composition has a sufficient degree of cross-linking

and improved resistance to scorch formation, if a cross-linkable polyethylene composition is used which comprises an unsaturated polyethylene and a cross-linking agent mixture comprising at least two peroxides which show different half-life times according to the present invention. It can also be seen that the total loading of peroxides is less, which is beneficial for exudation problems and reduces environmental stress.

## Claims

1. A cross-linkable polyethylene composition, comprising

   (i) an unsaturated polyethylene having a total amount of carbon-carbon double bonds/1000 carbon atoms of at least 0.1, and
   (ii) a cross-linking agent mixture comprising a first peroxide which is 1,3 1,4-bis (*tert*-butylperoxyisopropyl)-benzene (CAS RN: 25155-25-3) and a second peroxide which is dicumylperoxide, wherein the first peroxide has a 10-hour-half-life-temperature which is 1 to 10 degrees higher than that of the second peroxide monitored by differential scanning calorimetry-thermal activity monitoring (DSC-TAM) wherein the tested peroxide is diluted to a concentration of 0.1 Mol in dodecane, and
   wherein the said first peroxide is present in an amount of at least 8 wt% based on the total amount of the first and second peroxide of the cross linking agent mixture.

2. The cross-linkable polyethylene composition according to claim 1, wherein the cross-linking agent mixture further comprises additive(s) selected from the group consisting of cross-linking booster(s), antioxidant(s), stabilizer(s), carbon black(s) and combinations thereof.

3. The cross-linkable polyethylene composition according to one of the claims 1 or 2, wherein the cross-linkable polyethylene composition comprises 0.05 to 5.0 wt% of the cross-linking agent mixture.

4. The cross-linkable polyethylene composition according to one of the claims 1 to 3, wherein the unsaturated polyethylene is used in an amount of 95 to 99.7 wt.% based on the total cross-linkable polyethylene composition.

5. A cross-linked polyethylene composition, prepared by treatment of the polyethylene composition according to one of the claims 1-8 4 under cross-linking conditions.

6. A process for the preparation of a cross-linked polyethylene composition, wherein the cross-linkable polyethylene composition according to one of the claims 1-4 is treated under cross-linking conditions.

7. A multilayered article, having at least one layer comprising the cross-linkable polyethylene composition according to one of claims 1-4.

8. The multilayered article according to claim 7, wherein the article is a power cable.

9. A process for the production of a multilayered article, wherein the cross-linkable polyethylene composition according to one of claims 1-4 is applied as one or more layers onto a substrate by extrusion.

10. The process according to claim 9, wherein the multilayered article is a power cable and the cross-linkable polyethylene composition is applied onto the metallic conductor and/or at least one coating layer thereof.

11. A process according to claim 10, wherein the power cable is treated under cross-linking conditions such that the layers which comprise the cross-linkable polyethylene composition according to one of claims 1-4 are cross-linked.

## Patentansprüche

1. Vernetzbare Polyethylenzusammensetzung, die folgendes aufweist:

   (i) ein ungesättigtes Polyethylen mit einer Gesamtmenge an Kohlenstoff-Kohlenstoff-Doppelbindungen/1000 Kohlenstoffatome von mindestens 0,1 und
   (ii) ein Vernetzungsmittelgemisch, das ein erstes Peroxid, das 1,3 1,4-Bis(tert.-butylperoxyisopropyl)-benzol

(CAS RN: 25155-25-3) ist, und ein zweites Peroxid umfaßt, das Dicumylperoxid ist, wobei das erste Peroxid eine 10-Stunden-Halbwertstemperatur hat, die 1 bis 10 Grad höher als die des zweiten Peroxids ist, und zwar durch Kalorimetrie mit Differentialabtastung-Überwachung der thermischen Aktivität (DSC-TAM) beobachtet, wobei das getestete Peroxid in Dodecan bis zu einer Konzentration von 0,1 mol verdünnt ist; und wobei das erste Peroxid in einer Menge von mindestens 8 Gew.-% vorliegt, und zwar auf die Gesamtmenge des ersten und des zweiten Peroxids des Vernetzungsmittelgemischs bezogen.

**2.** Vernetzbare Polyethylenzusammensetzung nach Anspruch 1, wobei das Vernetzungsmittelgemisch ferner einen Zusatz (mehrere Zusätze) aufweist, der (die) aus der Gruppe ausgewählt ist (sind), die aus einem (mehreren) Vernetzungsbeschleuniger(n), Antioxidationsmittel(n), Stabilisator(en), Rußmaterial(ien) und Kombinationen davon besteht.

**3.** Vernetzbare Polyethylenzusammensetzung nach einem der Ansprüche 1 oder 2, wobei die vernetzbare Polyethylenzusammensetzung 0,05 bis 5,0 Gew.-% des Vernetzungsmittelgemischs aufweist.

**4.** Vernetzbare Polyethylenzusammensetzung nach einem der Ansprüche 1 bis 3, wobei das ungesättigte Polyethylen in einer Menge von 95 bis 99,7 Gew.-% verwendet wird, und zwar auf die gesamte vernetzbare Polyethylenzusammensetzung bezogen.

**5.** Vernetzte Polyethylenzusammensetzung, die durch Behandlung einer Polyethylenzusammensetzung nach einem der Ansprüche 1 bis 4 unter Vernetzungsbedingungen hergestellt ist.

**6.** Verfahren zum Herstellen einer vernetzten Polyethylenzusammensetzung, wobei die vernetzbare Polyethylenzusammensetzung nach einem der Ansprüche 1 bis 4 unter Vernetzungsbedingungen behandelt wird.

**7.** Mehrschichtiger Gegenstand, der zumindest eine Schicht aufweist, die die vernetzbare Polyethylenzusammensetzung nach den Ansprüchen 1 bis 4 umfaßt.

**8.** Mehrschichtiger Gegenstand nach Anspruch 7, wobei der Gegenstand ein Stromkabel ist.

**9.** Verfahren zum Herstellen eines mehrschichtigen Gegenstands, wobei die vernetzbare Polyethylenzusammensetzung nach einem der Ansprüche 1 bis 4 durch Extrusion als eine oder mehrere Schichten auf ein Substrat aufgebracht wird.

**10.** Verfahren nach Anspruch 9, wobei der mehrschichtige Gegenstand ein Stromkabel ist und die vernetzbare Polyethylenzusammensetzung auf den metallischen Leiter und/oder zumindest eine Überzugsschicht davon aufgebracht wird.

**11.** Verfahren nach Anspruch 10, wobei das Stromkabel unter Vernetzungsbedingungen behandelt wird, so daß die Schichten, die die vernetzbare Polyethylenzusammensetzung nach einem der Ansprüche 1 bis 4 aufweisen, vernetzen.

## Revendications

**1.** Composition de polyéthylène réticulable comprenant

(i) un polyéthylène insaturé ayant une quantité totale de doubles liaisons carbone-carbone/1000 atomes de carbone d'au moins 0,1, et
(ii) un mélange d'agents de réticulation comprenant un premier peroxyde qui est le 1,3-1,4-bis(tert-butylperoxyisopropyl)benzène (CAS RN : 25155-25-3) et un second peroxyde qui est le peroxyde de dicumyle, dans lequel le premier peroxyde a une température de demi-vie de 10 heures qui est supérieure de 1 à 10 degrés à celle du second peroxyde, surveillée par calorimétrie à balayage différentiel - surveillance de l'activité thermique (DSC-TAM), où le peroxyde testé est dilué à une concentration de 0,1 mol dans du dodécane, et

dans laquelle ledit premier peroxyde est présent en une quantité d'au moins 8 % en poids sur la base de la quantité totale des premier et second peroxydes du mélange d'agents de réticulation.

2. Composition de polyéthylène réticulable selon la revendication 1, dans laquelle le mélange d'agents de réticulation comprend en outre un ou plusieurs additifs choisis dans le groupe consistant en accélérateur(s) de réticulation, antioxydant(s), stabilisant(s), noir(s) de carbone et leurs combinaisons.

3. Composition de polyéthylène réticulable selon l'une des revendications 1 ou 2, laquelle composition de polyéthylène réticulable comprend 0,05 à 5,0 % en poids du mélange d'agents de réticulation.

4. Composition de polyéthylène réticulable selon l'une des revendications 1 à 3, dans laquelle le polyéthylène insaturé est utilisé en une quantité de 95 à 99,7 % en poids sur la base de la composition de polyéthylène réticulable totale.

5. Composition de polyéthylène réticulée préparée par traitement de la composition de polyéthylène selon l'une des revendications 1 à 4 dans des conditions de réticulation.

6. Procédé pour la préparation d'une composition de polyéthylène réticulée, dans lequel la composition de polyéthylène réticulable selon l'une des revendications 1 à 4 est traitée dans des conditions de réticulation.

7. Article multicouche ayant au moins une couche comprenant la composition de polyéthylène réticulable selon l'une des revendications 1 à 4.

8. Article multicouche selon la revendication 7, lequel article est un câble d'alimentation électrique.

9. Procédé pour la production d'un article multicouche, dans lequel la composition de polyéthylène réticulable selon l'une des revendications 1 à 4 est appliquée sous forme d'une ou plusieurs couches sur un substrat par extrusion.

10. Procédé selon la revendication 9, dans lequel l'article multicouche est un câble d'alimentation électrique et la composition de polyéthylène réticulable est appliquée sur le conducteur métallique et/ou au moins une couche de revêtement de celui-ci.

11. Procédé selon la revendication 10, dans lequel le câble d'alimentation électrique est traité dans des conditions de réticulation de façon que les couches qui comprennent la composition de polyéthylène réticulable selon l'une des revendications 1 à 4 soient réticulées.

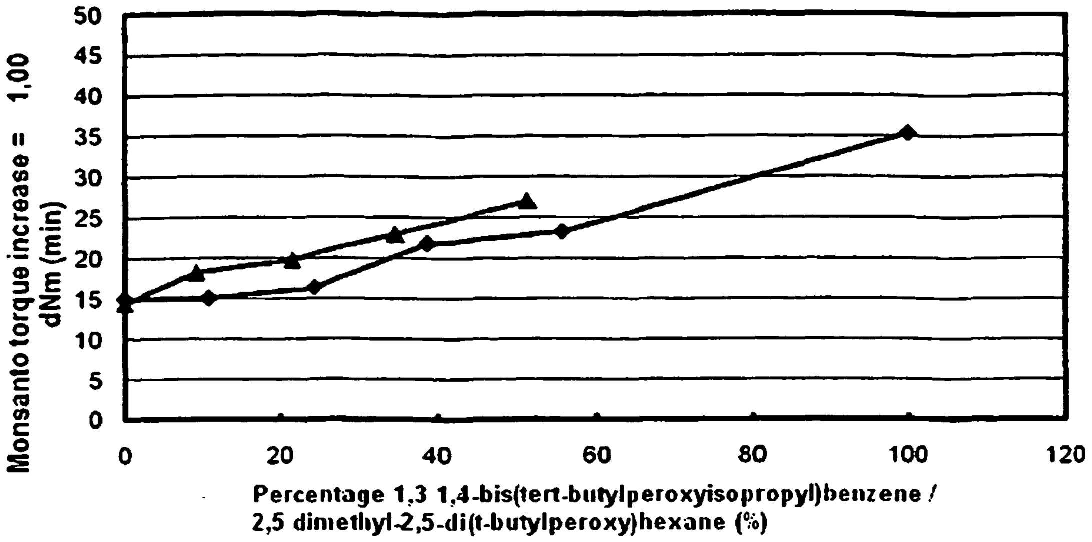


Figure 1

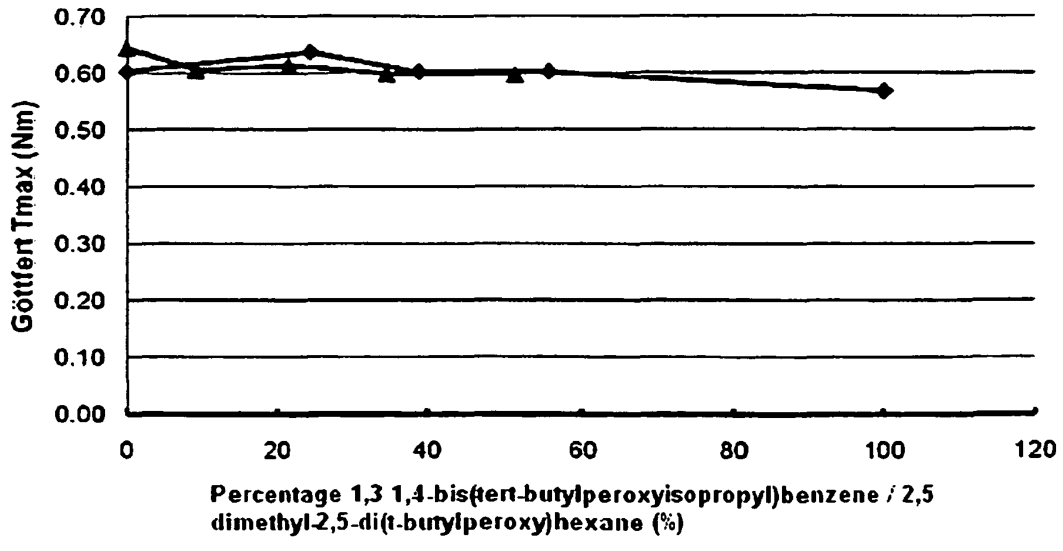


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9308222 A
- EP 1695996 A
- EP 0785229 A
- WO 9635732 A


### Non-patent literature cited in the description


- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184